# FASCICULE DE BREVET EUROPEEN

(11) **EP 1 133 406 B1**
(45) Date de publication et mention de la délivrance du brevet: **18.08.2004**
(21) Numéro de dépôt: 99956153.3
(22) Date de dépôt: 26.11.1999
(51) Int. Cl.: B60N 2/015

(54) **DISPOSITIF DE FIXATION D'UN SIEGE AMOVIBLE SUR UN PLANCHER DE VEHICULE AUTOMOBILE**
BEFESTIGUNGSVORRICHTUNG EINES ABNEHMBAREN SITZES AN EINEM KRAFTFAHRZEUGBODEN
DEVICE FOR FIXING A REMOVABLE SEAT ON A MOTOR VEHICLE FLOOR

(30) Priorité: 27.11.1998 FR 9814973
(43) Date de publication de la demande: 19.09.2001
(73) Titulaire: Renault s.a.s., 92100 Boulogne Billancourt (FR); Adam Opel AG, 65423 Rüsselsheim (DE)
(72) Inventeur: RIOU, Jean-Christophe, F-78390 Bois d'Arcy (FR)
(74) Mandataire: Srour, Elie
(86) Numéro de dépôt international: PCT/FR1999/002926
(87) Numéro de publication internationale: WO 2000/032439

(56) Documents cités:
- EP-A- 0 143 678
- GB-A- 2 008 938
- GB-A- 2 202 736
- US-A- 3 899 151
- US-A- 5 730 414

## Description

La présente invention se rapporte à un dispositif de fixation d'un siège amovible sur un plancher de véhicule automobile.

Pour certains types de véhicules automobiles, et notamment pour les véhicules utilitaires, il convient de pouvoir enlever et réinstaller facilement certains sièges tels que la banquette arrière.

On peut de la sorte adapter la configuration du véhicule automobile, selon par exemple que l'on souhaite transporter peu de personnes et beaucoup de matériel, ou inversement.

Le dispositif de fixation de siège amovible décrit par le brevet anglais 2 272 251 comporte un taquet à ressort susceptible de bloquer un premier rail solidaire du siège par rapport à un deuxième rail fixé sur le plancher du véhicule automobile.

Le taquet à ressort de ce dispositif comporte un grand nombre de pièces, d'où il résulte que son prix de revient est élevé.

En outre, ce taquet à ressort forme un mécanisme sensible aux souillures, susceptible de se coincer.

La présente invention a pour but de réaliser un dispositif de fixation de siège amovible qui ne présente pas ces inconvénients.

On atteint ce but de l'invention, ainsi que d'autres qui apparaîtront à la lecture de la description qui va suivre, avec un dispositif de fixation d'un siège amovible sur un plancher de véhicule automobile, remarquable en ce qu'il comprend un rail comportant au moins une rainure longitudinale permettant de le monter coulissant sur au moins des premier et deuxième goujons de guidage et de blocage fixés sur ledit plancher, ladite rainure comportant au moins une entretoise de butée disposée transversalement à sa longueur, et en ce qu'il comprend au moins un verrou monté sur ledit rail. Le verrou est pourvu de moyens d'actionnement du rail à coulissement tels qu'entre une position ouverte et une position fermée du verrou, un élément des moyens d'actionnement du rail est susceptible de se déplacer par rapport au rail, en étant contre un organe fixe par rapport au plancher, pour faire coulisser le rail jusqu'à ce que ladite entretoise vienne buter contre l'un desdits goujons, puis de bloquer cette entretoise contre ce goujon.

L'organe fixe par rapport au plancher est ledit goujon et l'élément des moyens d'actionnement est un coulisseau destiné à se déplacer longitudinalement par rapport audit rail pour, en étant contre un organe fixe par rapport au plancher, venir bloquer ladite entretoise contre ledit goujon.

Suivant d'autres caractéristiques de l'invention, ledit verrou comporte une poignée d'actionnement montée rotative sur ledit rail, un coulisseau destiné à se déplacer longitudinalement par rapport audit rail pour venir bloquer au moins ledit premier goujon contre ladite entretoise et, articulée entre ladite poignée et ledit coulisseau, une bielle.

Suivant d'autres caractéristiques de l'invention, ledit rail est creux, lesdits premier et deuxième goujons sont destinés à se positionner à l'intérieur dudit rail, et ledit coulisseau est susceptible de se déplacer à l'intérieur dudit rail.

Suivant d'autres caractéristiques de l'invention, lorsque ledit verrou est en position fermée, des parties dudit coulisseau et/ou de ladite (desdites) entretoise(s) sont placées entre la (les) tête(s) dudit premier (desdits) goujon(s) et ledit rail, de manière à supprimer le jeu transversal dudit rail par rapport audit premier (auxdits) goujon(s).

Suivant encore d'autres caractéristiques de l'invention, ladite rainure comporte au moins des première et deuxième parties élargies permettant d'introduire transversalement ledit rail sur lesdits premier et deuxième goujons.

Grâce à ces caractéristiques, on obtient un dispositif de fixation d'un siège amovible sur un plancher d'automobile dont la conception est extrêmement simple, dont l'utilisation est très ergonomique et dont la fiabilité est suffisante pour pouvoir envisager de l'utiliser notamment pour des véhicules utilitaires.

D'autres caractéristiques et avantages de la présente invention apparaîtront à la lecture de la description qui va suivre et à l'examen du dessin annexé dans lequel:
- la figure 1 est une vue partielle en perspective d'une banquette de véhicule automobile équipée de deux dispositifs de fixation selon l'invention;
- la figure 2 est une vue agrandie en perspective d'un dispositif de fixation selon l'invention;
- la figure 3 est une vue en coupe selon la ligne III-III du dispositif de fixation de la figure 2 lorsqu'il est positionné sur deux goujons de guidage et de blocage fixés sur le plancher d'un véhicule automobile, le verrou de ce dispositif étant en position ouverte;
- la figure 4 est analogue à la figure 3, à ceci près que le verrou est en position fermée.

Sur ces figures, des références numériques identiques représentent des organes ou éléments identiques ou analogues.

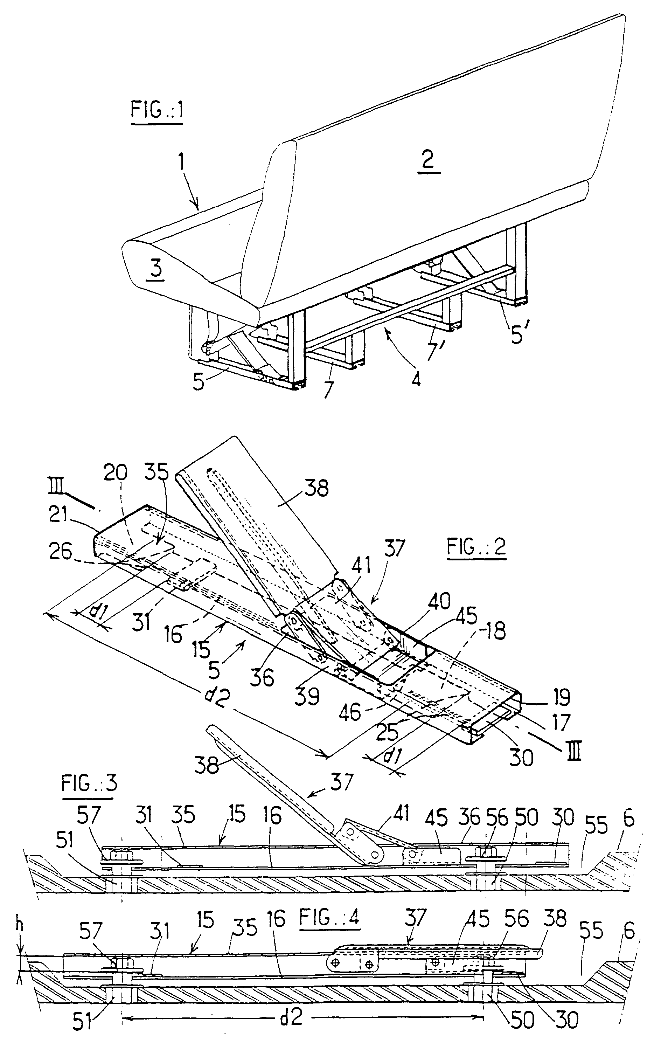

On se reporte à présent à la figure 1, sur laquelle on a représenté une banquette 1 de véhicule automobile, telle qu'une banquette arrière de véhicule utilitaire.

Comme on peut le voir sur cette figure, cette banquette 1 comporte typiquement un dossier 2 et une assise 3 supportés par une structure rigide 4.

Cette structure rigide repose à ses extrémités sur deux dispositifs de fixation 5, 5' selon l'invention, destinés à permettre de fixer amoviblement la banquette 1 sur le plancher 6 (voir figures 3, 4) d'un véhicule automobile.

Cette structure rigide peut aussi reposer, comme cela est représenté, sur des rails intermédiaires classiques 7, 7' destinés à améliorer la solidité de l'ensemble.

La structure rigide 4 peut éventuellement être conçue de manière que l'on puisse rabattre la banquette 1 tout en maintenant les dispositifs de fixation 5, 5', et les rails intermédiaires 7, 7' en place sur le plancher 6.

On se reporte à présent à la figure 2, sur laquelle on a représenté une vue agrandie d'un dispositif de fixation 5 selon l'invention.

Comme on peut le voir sur cette figure, ce dispositif comprend un rail creux 15 définissant un volume sensiblement parallèlépipédique.

Ce rail creux comporte une rainure longitudinale 16 formée dans toute la longueur de sa paroi inférieure 17, destinée à venir en vis-à-vis du plancher 6.

Cette rainure longitudinale comporte une première partie élargie 18 séparée par une petite distance de l'une 19 des deux extrémités du rail 15, ainsi qu'une deuxième partie élargie 20 ouverte sur l'autre extrémité 21 du rail 15

Des bords arrondis 25 et 26 relient respectivement les première 18 et deuxième 20 parties élargies au reste de la rainure longitudinale 16.

Des première 30 et deuxième 31 entretoises sont fixées à l'intérieur du rail 15 transversalement à la longueur de la rainure 16, à une même distance d1 respectivement des bords arrondis 25 et 26.

Sur sa paroi supérieure 35 opposée à sa paroi 17, le rail 15 comporte une ouverture de forme sensiblement rectangulaire 36 qui accueille un verrou 37.

Ce verrou comporte une poignée d'actionnement 38 de forme sensiblement rectangulaire, montée rotative à l'intérieur des deux parois latérales 39, 40 du rail 15.

Une bielle 41, de forme sensiblement rectangulaire et de largeur inférieure à celle de l'intérieur du rail 15, est montée rotative à l'une de ses extrémités sur la poignée d'actionnement 38.

L'autre extrémité de cette bielle est montée rotative sur un coulisseau 45 susceptible de se déplacer à l'intérieur du rail 15.

Ce coulisseau a une section en U correspondant à la section intérieure du rail 15, l'ouverture de ce U étant placée vers le haut (c'est-à-dire en vis-à-vis de la paroi 35 du rail), et il comporte un évidement 46 sur son bord situé en vis-à-vis de la première partie élargie 18.

L'épaisseur de ce bord du coulisseau est sensiblement égale à celle des première 30 et deuxième 31 entretoises.

La poignée d'actionnement 38, la bielle 41 et le coulisseau 45 sont dimensionnés de sorte qu'un rabattement de la poignée d'actionnement 38 contre la face 35 du rail 15 en direction de son extrémité 19 ait pour effet d'amener le coulisseau 45 à une position où son évidement 46 est situé sensiblement au droit des bords arrondis 25.

L'ensemble des organes décrits ci-dessus peuvent être fabriqués par exemple par pliage de tôles d'acier.

Les première 30 et deuxième 31 entretoises peuvent être rapportées à l'intérieur du rail 15 par soudage.

L'articulation de la poignée d'actionnement 38 sur le rail 15, ainsi que l'articulation de la bielle 41 sur cette poignée et sur le coulisseau 45 peut être réalisée de toute manière classique, connue de l'homme de l'art.

On se reporte à présent aux figures 3 et 4, sur lesquelles on a représenté le dispositif de fixation selon l'invention lorsqu'il est positionné sur le plancher 6 d'un véhicule automobile, le verrou 37 étant respectivement en position ouverte et fermée. La banquette 1 n'est pas représentée, mais il faut bien entendu comprendre qu'elle est placée au dessus du dispositif de fixation.

Sur ces figures, le sens de marche du véhicule est vers la gauche.

Comme on peut le voir sur ces figures, le rail 15 est destiné à coopérer avec des premier 50 et deuxième 51 goujons de guidage et de blocage fixés dans le plancher 6 dans une partie en retrait 55 de celui-ci.

La distance d2 séparant ces goujons est sensiblement égale à celle qui sépare les zones médianes des première 18 et deuxième 20 parties élargies de la rainure 16 (voir figure 2).

Ces goujons comportent chacun une tête 56, 57 de diamètre inférieur à la largeur des première 18 et deuxième 20 parties élargies, et supérieur à la largeur de la partie étroite de la rainure 16.

La hauteur h de ces têtes est sensiblement égale à la distance séparant les entretoises 30, 31 de l'intérieur de la paroi 35 du rail 15.

Pour installer la banquette 1 sur le plancher 6, on procède de la manière suivante.

Le verrou étant en position ouverte (c'est-à-dire la poignée d'actionnement 38 étant écartée au maximum de l'extrémité 19 du rail 15), on introduit le rail 15 transversalement sur les premier 50 et deuxième 51 goujons, de sorte que ces goujons pénètrent respectivement dans les première 18 et deuxième 20 parties élargies de la rainure 16, puis viennent s'appuyer contre l'intérieur de la paroi 35 du rail 15 (figure 3).

On rabat ensuite la poignée d'actionnement 38 contre la paroi 35 du rail 15 en direction de son extrémité 19. Ceci a pour effet d'amener la partie évidée 46 du coulisseau 45 contre le premier goujon 50.

En poursuivant ce mouvement de la poignée d'actionnement, on fait coulisser le rail 15 par rapport aux goujons 50, 51 (vers la gauche sur les figures 3 et 4).

Cette opération est facilitée par les bords arrondis 25, 26 qui permettent au rail 15 de bien glisser sur les goujons.

On amène ainsi ce rail jusqu'à une position de blocage longitudinal, correspondant au rabattement complet de la poignée 38 sur la paroi 35, où la première entretoise 30 et le coulisseau 45 enserrent le premier goujon 50, et où la deuxième entretoise 31 bute contre le deuxième goujon 51 (figure 4).

Ce faisant, on obtient également un blocage transversal du rail 15 par rapport au plancher 6.

En effet, on peut remarquer que la première entretoise 30 et le coulisseau 45 viennent se placer partiellement sous la tête 56 du premier goujon 51, bloquant ainsi celle-ci contre la paroi 35 du rail 15.

De même, la deuxième entretoise 31 vient bloquer la tête 57 du deuxième goujon 51 contre la paroi 35.

On supprime de la sorte le jeu transversal du rail 15 par rapport au plancher 6.

Pour débrayer le dispositif de fixation selon l'invention afin d'enlever la banquette 1 de l'intérieur du véhicule automobile, on effectue les opérations décrites ci-dessus dans l'ordre inverse.

Une fois que la banquette 1 est enlevée, on obtient un volume de transport optimal étant donné que les goujons 50, 51 sont placés en retrait par rapport au plancher 6.

Comme on peut le comprendre à présent, le dispositif de fixation selon l'invention est facile et rapide à mettre en oeuvre: le simple rabattement de la poignée d'actionnement 38 permet à la fois de faire coulisser le rail 15 jusqu'à sa position de blocage et de le bloquer effectivement.

Ce dispositif de fixation offre en outre une grande sécurité, étant donné d'une part qu'il est très facile d'apprécier visuellement si le blocage est bien réalisé, et d'autre part que le coulisseau 45 ne peut pas s'écarter spontanément de sa position de blocage.

Enfin, la conception très simple de ce dispositif permet non seulement de le fabriquer à faible coût, mais encore d'en garantir la fiabilité.

Bien entendu, la présente invention n'est pas limitée au mode de réalisation décrit et représenté qui n'a été donné qu'à titre d'exemple.

C'est ainsi par exemple que le rail 15 pourrait comporter plusieurs rainures disposées les unes derrière les autres, et/ou parallèlement les unes aux autres.

C'est ainsi également que ces rainures pourraient être situées sur l'une (ou les deux) parois latérales du rail 15. Dans ce cas, elles coopéreraient avec des goujons dont les axes seraient horizontaux.

C'est ainsi également que le rail 15 pourrait coopérer avec plus de deux goujons.

C'est ainsi également que l'on pourrait monter plus d'un verrou par rail.

C'est ainsi également que le rail 15 pourrait ne comporter que la première entretoise 30. Dans ce cas, le deuxième goujon 51 n'aurait qu'une fonction de blocage transversal.

C'est ainsi également que l'on pourrait utiliser un rail plein destiné à être traversé par les goujons. Dans ce cas, le coulisseau du verrou serait placé à l'extérieur du rail.

C'est ainsi également que l'on pourrait envisager un siège comportant un seul ou plus de deux dispositifs de fixation selon l'invention.

## Revendications

1. Dispositif de fixation (5, 5') d'un siège amovible (1) sur un plancher (6) de véhicule automobile, **caractérisé en ce qu'**il comprend un rail (15) comportant au moins une rainure longitudinale (16) permettant de le monter coulissant sur au moins deux goujons de guidage et de blocage (50, 51) fixés sur ledit plancher (6), ladite rainure (16) comportant au moins une entretoise (30, 31) de butée disposée transversalement à sa longueur, et **en ce qu'**il comprend au moins un verrou (37) monté sur ledit rail (15), ledit verrou (37) étant pourvu de moyens d'actionnement (38, 41, 45) du rail à coulissement tels qu'entre une position ouverte et une position fermée du verrou (37), un élément (45) des moyens d'actionnement du rail est susceptible de se déplacer par rapport au rail, en étant contre un organe (50) fixe par rapport au plancher (6), pour faire coulisser le rail jusqu'à ce que ladite entretoise (30) vienne buter contre l'un (50) desdits goujons, puis de bloquer cette entretoise contre ce goujon.

2. Dispositif de fixation (5, 5') selon la revendication 1, **caractérisé en ce que** l'organe fixe par rapport au plancher est ledit goujon (50) et l'élément des moyens d'actionnement est un coulisseau (45) destiné à se déplacer longitudinalement par rapport audit rail (15) pour, en étant contre un organe fixe par rapport au plancher, venir bloquer ladite entretoise (30) contre ledit goujon (50).

3. Dispositif de fixation (5, 5') selon l'une quelconque des revendications 1 ou 2, **caractérisé en ce que** ledit verrou (37) comporte une poignée d'actionnement (38) montée rotative sur ledit rail (15), un coulisseau (45) destiné à se déplacer longitudinalement par rapport audit rail (15) pour venir bloquer ladite entretoise (30) contre ledit goujon (50) et, articulée entre ladite poignée (38) et ledit coulisseau (45), une bielle (41).

4. Dispositif de fixation (5, 5') selon l'une quelconque des revendications 1 ou 3, **caractérisé en ce que** ledit rail (15) est creux, **en ce que** lesdits goujons (50, 51) sont destinés à se positionner à l'intérieur dudit rail (15), et **en ce que** ledit coulisseau (45) est susceptible de se déplacer à l'intérieur dudit rail (15).

5. Dispositif de fixation (5, 5') selon l'une quelconque des revendications 3 ou 4, **caractérisé en ce que** lorsque ledit verrou (37) est en position fermée, des parties dudit coulisseau (45) et/ou de ladite/desdites entretoise/s (30, 31) sont placées entre la/les tête/s (56, 57) dudit/desdits goujon(s) (50, 51) et ledit rail (15), de manière à supprimer le jeu transversal dudit rail (15) par rapport audit/auxdits goujon/s (50, 51).

6. Dispositif de fixation (5, 5') selon l'une quelconque des revendications précédentes, **caractérisé en ce que** ladite rainure (16) comporte au moins des première (18) et deuxième (20) parties élargies permettant d'introduire transversalement ledit rail (15) sur lesdits goujons (50, 51).

7. Siège amovible (1) pour véhicule automobile, **caractérisé en ce qu'**il comporte au moins un dispositif de fixation (5, 5') conforme à l'une quelconque des revendications précédentes.

## Patentansprüche

1. Befestigungsvorrichtung (5, 5') eines abnehmbaren Sitzes (1) an einem Boden (6) des Kraftfahrzeugs, **dadurch gekennzeichnet, dass** sie eine Schiene (15) aufweist, welche mindestens eine longitudinale Nut (16) aufweist, die es ermöglicht, ihn gleitend an mindestens zwei Führungs- und Blockierbolzen (50, 51) zu montieren, welche an dem Fahrzeugboden (6) befestigt sind, wobei die Nut (16) mindestens einen Anschlagssteg (30, 31) aufweist, welcher quer zu ihrer Länge angeordnet ist, und dass sie mindestens einen Riegel (37) aufweist, der an der Schiene (15) montiert ist, wobei der Riegel (37) mit Betätigungsmitteln (38, 41, 45) der Schiene in Gleitung derart versehen ist, dass zwischen einer offenen Stellung und einer geschlossenen Stellung des Riegels (37) ein Element (45) der Betätigungsmittel der Schiene fähig ist, sich im Verhältnis zur Schiene zu verstellen unter einem Anliegen gegen ein Organ (50), das im Verhältnis zum Fahrzeugboden (6) fest ist, um die Schiene gleiten zu lassen, bis der Steg (30) in Anschlag gegen einen der Bolzen (50) gelangt, sodann diesen Steg gegen diesen Bolzen zu blockieren.

2. Befestigungsvorrichtung (5, 5') gemäß Anspruch 1, **dadurch gekennzeichnet, dass** das Organ, welches im Verhältnis zum Fahrzeugboden fest ist, der Bolzen (50) ist und das Element der Betätigungsmittel ein Gleitstück (45) ist, welches dafür bestimmt ist, sich longitudinal im Verhältnis zur Schiene (15) zu verstellen, um unter einem Anliegen gegen ein Organ, welches im Verhältnis zum Fahrzeugboden fest ist, den Steg (30) gegen den Bolzen (50) zu blockieren.

3. Befestigungsvorrichtung (5, 5') gemäß irgendeinem der Ansprüche 1 oder 2, **dadurch gekennzeichnet, dass** der Riegel (37) einen Betätigungsgriff (38) aufweist, der drehend an der Schiene (15) montiert ist, ein Gleitstück (45), welches dafür bestimmt ist, sich longitudinal im Verhältnis zur Schiene (15) zu verstellen, um den Steg (30) gegen den Bolzen (50) zu blockieren und ein Zwischenglied (41), welches zwischen dem Griff (38) und dem Gleitstück (45) angelenkt ist.

4. Befestigungsvorrichtung (5, 5') gemäß irgendeinem der Ansprüche 1 oder 3, **dadurch gekennzeichnet, dass** die Schiene (15) hohl ist, dass die Bolzen (50, 51) dafür bestimmt sind, im Inneren der Schiene (15) positioniert zu werden und dass das Gleitstück (45) fähig ist, sich im Inneren der Schiene (15) zu verstellen.

5. Befestigungsvorrichtung (5, 5') gemäß irgendeinem der Ansprüche 3 oder 4, **dadurch gekennzeichnet, dass**, wenn der Riegel (37) in geschlossener Stellung ist, Teile des Gleitstücks (45) und/oder des/der Steg/e (30, 31) zwischen den/die Kopf/Köpfe (56, 57) des/der Bolzens/Bolzen (50, 51) und die Schiene (15) in einer Art und Weise gesetzt sind, um das transversale Spiel der Schiene (15) im Verhältnis zu dem/den Bolzen (50, 51) aufzuheben.

6. Befestigungsvorrichtung (5, 5') gemäß irgendeinem der vorhergehenden Ansprüche, **dadurch gekennzeichnet, dass** die Nut (16) mindestens einen ersten (18) und einen zweiten (20) erweiterten Teil aufweist, welcher es erlaubt, die Schiene (15) auf die Bolzen (50, 51) transversal einzuführen.

7. Abnehmbarer Sitz (1) für ein Kraftfahrzeug, **dadurch gekennzeichnet, dass** er mindestens eine Befestigungsvorrichtung (5, 5') gemäß irgendeinem der vorhergehenden Ansprüche aufweist.

## Claims

1. Fixing device (5, 5') for a removable seat (1) on a floor (6) of a motor vehicle, **characterized in that** it comprises a rail (15) containing at least one longitudinal groove (16) allowing it to be mounted sliding on at least two guiding and locking studs (50, 51) fixed on said floor (6), said groove (16) containing at least one thrust cross-piece (30, 31) disposed transversely to its length, and **in that** it contains at least one bolt (37) mounted on said rail (15), said bolt (37) being provided with means (38, 41, 45) of operating the rail sliding for example between an open and a closed position of the bolt (37), an element (45) of the means for operating the rail is able to move relative to the rail, being against an organ (50) which is fixed relative to the floor (6), in order to cause the rail to slide until said cross-piece (30) comes to rest against one (50) of said studs, then lock this cross-piece against this stud.

2. Fixing device (5,5') according to claim 1, **characterized in that** the organ which is fixed relative to the floor is said stud (50) and the element of the operating means is a slider (45) intended to move longitudinally relative to said rail (15) in order that, being against an organ which is fixed relative to the floor, it locks said cross-piece (30) against said stud (50).

3. Fixing device (5, 5') according to any one of claims 1 or 2, **characterized in that** said bolt (37) includes an operating handle (38) mounted rotary on said rail (15), a slider (45) intended to move longitudinally relative to said rail (15) in order to lock said cross-piece (30) against said stud (50) and, articulated between said handle (38) and said slider (45), a connecting rod (41).

4. Fixing device (5, 5') according to any one of claims 1 or 3, **characterized in that** said rail (15) is hollow, **in that** said studs (50, 51) are intended to be positioned inside said rail (15), and **in that** said slider (45) is able to move inside said rail (15).

5. Fixing device (5, 5') according to any one of claims 3 or 4, **characterized in that** when said bolt (37) is in closed position, parts of said slider (45) and/or of said cross-piece(s) (30, 31) are placed between the heads (56, 57) of said stud(s) (50, 51) and said rail (15) so as to suppress the side play of said rail (15) relative to said studs (50,51).

6. Fixing device (5, 5') according to any one of the preceding claims, **characterized in that** said groove (16) contains at least first (18) and second (20) widened parts permitting the transverse introduction of said rail (15) on said studs (50, 51).

7. Removable seat (1) for a motor vehicle, **characterized in that** it contains at least one fixing device (5, 5') according to any one of the preceding claims.
